# EUROPEAN PATENT SPECIFICATION

(11) **EP 1 236 400 B1**
(45) Date of publication and mention of the grant of the patent: **06.12.2006**
(21) Application number: 02075798.5
(22) Date of filing: 28.02.2002
(51) Int. Cl.: A21D 10/00, A21D 2/16, A21D 2/18, A21D 8/04

(54) **Pumpable bread improver and a method for preparation thereof**
Pumpfähiges Brotverbesserungsmittel und Verfahren zur Herstellung
Composition pompable d'amélioration du pain et procédé pour sa fabrication

(30) Priority: 28.02.2001 NL 1017461
(43) Date of publication of application: 04.09.2002
(73) Proprietor: SONNEVELD B.V., NL-3356 LJ Papendrecht (NL)
(72) Inventor: Sonneveld, Gerrit Cornelis, 4328 KL Burgh Haamstede (NL)
(74) Representative: Van Someren, Petronella F. H. M.

(56) References cited:
- EP-A- 0 421 510
- EP-A- 1 214 888
- WO-A-01/05256
- WO-A-01/70036
- GB-A- 2 335 433
- DATABASE WPI Derwent Publications Ltd., London, GB; AN 111121 XP002167496 & JP 59 051742 A (ASAHI DENKA KOGYO KK), 26 March 1984 (1984-03-26)

## Description

The present invention relates to a pumpable bread improver and a method for the preparation thereof.

A bread improver is a mixture of ingredients that, next to flour, water, yeast and salt, are used as improver. Bread improvers have an important function during the process of making bread because they counterbalance the changes in the quality of the flour and process variations. They play a role in the improvement of the characteristic properties of bread and the realization of a broad assortment of bread products.

A bread improver is a combination of basic ingredients, additives and technological resources. Besides this, also other foods can also be added as an ingredient. The basic ingredients are ingredients, which are added in quantities from about 0.3 percent (calculated in relation to the flour). These ingredients include milk components, wheat gluten, soya flour, malt flour or malt extract, sugars, oils and fats. The additives consist of emulsifiers, acid regulators, colorings and conservatives. Finally, the technical resources include flour improvers and enzymes.

Bread improvers are known in different forms, like powders, pastes or liquids. They can contain more or less of the above mentioned types of ingredients, depending on the sort of bread for which they are used. GB2335433 discloses a particulate delivery system for a food product comprising (a) an oil and/or an oil mimetic component, (b) a triglyceride fatty acid and/or a high melting point emulsifier component, (c) a particulate component wherein the particulate comportent is in stable suspension within a crystal matrix formed by component (b) with the proviso that (c) does not form a crystal matrix (b) may comprises stearolyllactylate. In some cases, combinations of dosage means are used to obtain a broadly applicable bread improver. It is known to use a separate liquid fat phase next to a powder product, which contains the other ingredients. A disadvantage of this is that one has to dose twice.

In bakeries, process automation plays an ever increasing role. Additionally, the demand for automatic dosable basic ingredients also increases. Already, it has been a custom for a long time to automatically dose flour and water. During the last few years, also liquid yeast has entered the industrial bakeries. Because of the broad assortment in bakeries, the automated dosing of bread improvers has been delayed until now. Already used today are large scale charge packages with salt. Nevertheless, the demand for automated dosing of concentrated bread improvers remains. As a consequence, this also implies that the transport has to take place in bulk packages or containers and the storage in silos.

Nevertheless, when already existing bread improvers are concentrated, they turn out to be no longer pumpable. Especially bread improvers, which use as an emulsifier stearoyllactylate and mono-/ diglycerides of fatty acids, are already at an amount of 6 percent emulsifier unpumpable. Such an amount of stearoyllactylate and mono-/ diglycerides of fatty acids is much too low to be used in a concentrated bread improver.

Finally, it is desired that, prior to dosage, the bread improver does not need to be preprocessed, like for example heating in order to liquidize the improver.

It is therefor the aim of the invention to provide a concentrated bread improver which is still pumpable, without requiring heating or other preprocessing steps.

This is achieved by the invention by providing a pumpable bread improver having a viscosity of from 80 mPa.s. to 3000 mPa.s. at 20°C, consisting of an oil fraction and a powder fraction and obtainable by a method which comprises the following steps:
(a) mixing the liquid oil fraction and means for preventing sedimentation of the powder fraction at a temperature at which the means for preventing of the sedimentation of the powder fraction are liquid;
(b) cooling down of the obtained mixture; and
(c) adding and mixing of the powder fraction which contains at least one or more emulsifiers
wherein the means for preventing the sedimentation of the powder fraction are chosen from the group consisting of hardened fats and mono-/diglycerides, and wherein the emulsifiers are chosen from stearoyllactylates.

It has been found that when the above mentioned sequential of steps is used, a bread improver is obtained which is pumpable at room temperatures and which can, by means of pumping, be dosed into the dough. The powder fraction can be present in the end product between 5 to 55 percent, in which case the powder fractions contain stearoyllactylate, as emulsifier, even up to 30 to 50 percent thereof without negatively affecting the pumpability of the product.

According to the invention, the viscosity of the pumpable bread improver is between 80 and 3000, preferably between 400 and 1500 and more preferably between 600 and 1000 mPa.s.

The means for preventing the sedimentation of the powder fraction (also called the "hard fraction") are important to prevent the powder fraction from sedimentation after a certain period of time and thus again needs to be mixed with the oil fraction. Because of these means, an homogenous end product is obtained.

When hardened fats are used, they can be of plant or animal origin and they are preferably chosen from the group consisting of hardened palm oil, hardened fractions of palm oil, hardened soya oil and hardened rape seed oil. With fractions of palm oil is meant (hard) fractions obtained through the fractioning of palm oil.

To ensure the pumpability of the end product, it is also important that traditional fat fractions, an oil fraction of plant or animal origin, are liquid, at room temperature. Suitable oils are plant oils chosen from the group which consists of sunflower oil, soya oil, rape seed oil, safflower oil and arachide oil.

Emulsifiers are fatty substances that have an emulsifying property through which they interact with the gluten, proteins and oils, in other word lipids, which are present in the flour. They provide a more flexible dough, a dough, which is more tolerant during rising, a more delicate crumb and a longer tenderness of the bread. Because of their emulsifying properties, emulsifiers are more active than oils and fats. In addition, the optimal effect is obtained at lower concentrations. The optimal addition of and emulsifier is usually between 0.25 and 0.5 percent in relation to the flour while usually fat is used in amounts of 1 percent and higher.

The emulsifiers which are applied to the bread improver according to the invention are stearoyllactylates. Stearoyllactylates can be used in the form of a powder. Mono and diglycerides of fatty acids having a melting point above 35 degrees, can serve as the "hard fraction".

Besides emulsifiers, the powder fraction can further contain one or more of the usual micro components. These micro components are the above mentioned additives and technological resources, like oxidation and reduction means, enzymes and flavorings.

The powder fraction can further contain one or more basic ingredients, which preferably are chosen from sugars, grains and/or legumes, vital gluten, starches, milk derivatives and malt flour.

According to the invention, the powder fraction in the bread improver can be between 5 and 55 percent, preferably between 10 and 50 percent, and more preferably between 30 and 50 percent. Because of this, an important concentration of the important ingredients is possible, while the bread improver remains pumpable.

The invention further relates to a method for the preparation of a pumpable bread improver having a viscosity of from 80 mPa.s. to 3000 mPa.s. at 20°C, comprising
(a) mixing the liquid oil fraction and means for preventing sedimentation of the powder fraction at a temperature at which the means for preventing the sedimentation of the powder fraction are liquid;
(b) cooling down of the obtained mixture; and
(c) adding and mixing of the powder fraction which contains at least one or more emulsifiers,
wherein the means for preventing the sedimentation of the powder fraction are chosen from the group consisting of hardened fats and mono-/diglycerides, and wherein the emulsifiers are chosen from stearoyllactylates.

The mixing of the different fractions can very simply be done in a mixing apparatus. The means for preventing the sedimentation of the powder fraction, also referred to as the "hard fraction", are melted into the oil fraction. Preferably, the powder fraction will be added when the temperature of the mixture of the oil fraction and the hard fraction is lowered under the melting point of the used emulsifiers which are present in the powder fraction.

The viscosity limits of the pumpable bread improver, which renders them suitable for use by the general dosage pumps in the bakeries, is between 80 mPa.s. and 3000 mPa.s. at 20 degrees (determined with a rotoviscometer with a shifting velocity of 600 per second) with a maximal yield stress of 100 Pa.s.

The invention will further be illustrated by the following example.

### EXAMPLE

### Pumpable bread improver according to the invention

For the preparation of a bread improver according to the invention the following ingredients were used:
Oil fraction:
   52% rape seed oil
Hard fraction:
   1% fully hardened palm oil
   2% mono-/diglycerides of fatty acids
Powder fraction:
   30% stearoyllactylate
   11.4% bean flour
   3% ascorbic acid
   0.6% enzymes

The palm oil and the mono-/diglycerides were added to the rape seed oil at a temperature of 80 degrees. After cooling down of the mixture, the powder fraction was mixed by using a static mixer. The, in this way, obtained bread improver was homogenous and remained homogenous even after two months of storage at room temperature.

## Claims

1. A pumpable bread improver having a viscosity of from 80 mPa.s. to 3000 mPa.s. at 20°C, consisting of an oil fraction and a powder fraction and obtainable by a method which comprises the following steps:
(a) mixing the liquid oil fraction and means for preventing sedimentation of the powder fraction at a temperature at which the means for preventing of the sedimentation of the powder fraction are liquid;
(b) cooling down of the obtained mixture; and
(c) adding and mixing of the powder fraction which contains at least one or more emulsifiers,
wherein the means for preventing the sedimentation of the powder fraction are chosen from the group consisting of hardened fats and mono-/diglycerides, and wherein the emulsifiers are chosen from stearoyllactylates.

2. A bread improver according to claim 1, **characterized in that** the viscosity is preferably between 400 and 1500, more preferably between 600 and 1000 mPa.s.

3. A bread improver according to claims 1-2, **characterized in that** the hardened fats are of plant and/or animal origin.

4. A bread improver according to claim 3, **characterized in that** the hardened fats are chosen from the group consisting of hardened palm oil, hardened fractions of palm oil, hardened soya oil or hardened rapeseed oil.

5. A bread improver according to one or more of the claims 1 to 4, **characterized in that** the oil fraction is of plant and/or animal origin.

6. A bread improver according to claim 5, **characterized in that** the oil fraction is chosen from the group consisting of sunflower oil, soya oil, rapeseed oil, safflower oil and arachide oil.

7. A bread improver according to one or more of the claims 1 to 6, **characterized in that** the powder fraction further contains one or more micro components which are chosen from the group consisting of oxidation and reduction means, enzymes, aromas and flourings.

8. A bread improver according to one or more of the claims 1 to 7, **characterized in that** the powder fraction further comprises one or more basic ingredients which are chosen from the group consisting of sugars, flour of grains and/or legumes, vital glutes, starches, physically modified starches, salt, milk derivatives and malt flour.

9. A bread improver according to one or more of the claims 1 to 8, **characterized in that** the powder fraction forms 5 to 55 percent, preferably 10 to 50 percent and more preferably between 30 to 50 percent of the bread improver.

10. A method for preparation of a pumpable bread improver having a viscosity of from 80 mPa.s. to 3000 mPa.s. at 20°C, comprising
(a) mixing the liquid oil fraction and means for preventing sedimentation of the powder fraction at a temperature at which the means for preventing the sedimentation of the powder fraction are liquid;
(b) cooling down of the obtained mixture; and
(c) adding and mixing of the powder fraction which contains at least one or more emulsifiers,
wherein the means for preventing the sedimentation of the powder fraction are chosen from the group consisting of hardened fats and mono-/diglycerides, and wherein the emulsifiers are chosen from stearoyllactylates.

11. A method according to claim 10, **characterized in that** the oil fraction, the powder fraction and means for preventing sedimentation of the powder fraction are defined as in claims 2 to 9.

## Patentansprüche

1. Pumpfähiges Brotverbesserungsmittel mit einer Viskosität von 80 mPa.s. bis 3000 mPa.s. bei 20°C, bestehend aus einem Ölanteil und einem Pulveranteil und gewinnbar durch ein Verfahren, das die folgenden Schritte enthält:
(a) Mischen des flüssigen Ölanteils mit einem Mittel zum Verhindern des Absetzens des Pulveranteils bei einer Temperatur, bei der das Mittel zum Verhindern des Absetzens des Pulveranteils flüssig ist,
(b) Abkühlen der gewonnenen Mischung und
(c) Hinzufügen und Mischen des Pulveranteils, der zumindest einen oder mehrere Emulgatoren enthält;
wobei das Mittel zum Verhindern des Absetzens des Pulveranteils aus der aus gehärteten Fetten und Mono-/Diglyceriden gebildeten Gruppe gewählt ist und
wobei die Emulgatoren aus Stearoyllactylaten gewählt sind.

2. Brotverbesserungsmittel nach Anspruch 1, **dadurch gekennzeichnet, dass** die Viskosität vorzugsweise zwischen 400 und 1500 und in weiter bevorzugter Weise zwischen 600 und 1000 m-Pa.s. liegt.

3. Brotverbesserungsmittel nach Anspruch 1 oder 2, **dadurch gekennzeichnet, dass** die gehärteten Fette pflanzlichen und/oder tierischen Ursprungs sind.

4. Brotverbesserungsmittel nach Anspruch 3, **dadurch gekennzeichnet, dass** die gehärteten Fette aus der Gruppe gewählt sind, die aus gehärtetem Palmöl, gehärteten Fraktionen von Palmöl, gehärtetem Sojaöl oder gehärtetem Rapsöl besteht.

5. Brotverbesserungsmittel nach einem oder mehreren der Ansprüche 1 bis 4, **dadurch gekennzeichnet, dass** der Ölanteil pflanzlichen und/oder tierischen Ursprungs ist.

6. Brotverbesserungsmittel nach Anspruch 5, **dadurch gekennzeichnet, dass** der Ölanteil aus der Gruppe gewählt ist, die aus Sonnenblumenöl, Sojaöl, Rapsöl, Distelöl und Erdnussöl besteht.

7. Brotverbesserungsmittel nach einem oder mehreren der Ansprüche 1 bis 6, **dadurch gekennzeichnet, dass** der Pulveranteil weiter eine oder mehrere Mikrokomponenten enthält, die aus der Gruppe gewählt werden, die aus Oxidations- und Reduktionsmitteln, Enzymen, Aromen und Gewürzen besteht.

8. Brotverbesserungsmittel nach einem oder mehreren der Ansprüche 1 bis 7, **dadurch gekennzeichnet, dass** der Pulveranteil weiter eine oder mehrere Grundzutaten enthält, die aus der Gruppe gewählt werden, die aus Zucker, Mehl von Getreide und/oder Gemüse, Vitalgluten, Stärken, physikalisch veränderten Stärken, Salz, Milchderivaten und Malzmehl besteht.

9. Brotverbesserungsmittel nach einem oder mehreren der Ansprüche 1 bis 8, **dadurch gekennzeichnet, dass** der Pulveranteil 5 bis 55 Prozent, vorzugsweise 10 bis 50 Prozent und in weiter bevorzugter Weise 30 bis 50 Prozent des Brotverbesserungsmittels bildet.

10. Verfahren zum Bereiten eines pumpfähigen Brotverbesserungsmittels mit einer Viskosität von 80 mPa.s. bis 3000 mPa.s. bei 20°C, enthaltend:
(a) Mischen des flüssigen Ölanteils mit einem Mittel zum Verhindern des Absetzens des Pulveranteils bei einer Temperatur, bei der das Mittel zum Verhindern des Absetzens des Pulveranteils flüssig ist,
(b) Abkühlen der gewonnenen Mischung und
(c) Hinzufügen und Mischen des Pulveranteils, der zumindest einen oder mehrere Emulgatoren enthält;
wobei das Mittel zum Verhindern des Absetzens des Pulveranteils aus der aus gehärteten Fetten und Mono-/Diglyceriden gebildeten Gruppe gewählt ist und
wobei die Emulgatoren aus Stearoyllactylaten gewählt sind.

11. Verfahren nach Anspruch 10, **dadurch gekennzeichnet, dass** der Ölanteil, der Pulveranteil und das Mittel zum Verhindern des Absetzens des Pulveranteils wie in Anspruch 2 bis 9 definiert sind.

## Revendications

1. Améliorateur de pain pompable ayant une viscosité de 80 mPa.s. à 3 000 mPa.s. à 20° C, constitué d'une fraction d'huile et d'une fraction de poudre et pouvant être obtenu par un procédé qui comprend les étapes suivantes consistant à :
(a) mélanger la fraction d'huile liquide et des moyens pour prévenir la sédimentation de la fraction de poudre à une température à laquelle les moyens pour prévenir la sédimentation de la fraction de poudre sont liquides ;
(b) refroidir le mélange obtenu ; et
(c) ajouter et mélanger la fraction de poudre qui contient au moins un ou plusieurs émulsifiants,
dans lequel les moyens pour prévenir la sédimentation de la fraction de poudre sont choisis dans le groupe constitué des graisses durcies et des mono-/diglycérides, et
dans lequel les émulsifiants sont choisis parmi les stéaroyllactylates.

2. Améliorateur de pain selon la revendication 1, **caractérisé en ce que** la viscosité est de préférence entre 400 et 1 500, de manière plus préférée entre 600 et 1 000 mPa.s.

3. Améliorateur de pain selon les revendications 1 et 2, **caractérisé en ce que** les grasses durcies sont d'origine végétale et/ou animale.

4. Améliorateur de pain selon la revendication 3, **caractérisé en ce que** les graisses durcies sont choisies dans le groupe constitué de l'huile de palme durcie, des fractions durcies d'huile de palme, de l'huile de soja durcie ou de l'huile de colza durcie.

5. Améliorateur de pain selon une ou plusieurs des revendications 1 à 4, **caractérisé en ce que** la fraction d'huile est d'origine végétale et/ou animale.

6. Améliorateur de pain selon la revendication 5, **caractérisé en ce que** la fraction d'huile est choisie dans le groupe constitué de l'huile de tournesol, de l'huile de soja, de l'huile de colza, de l'huile de carthame et de l'huile d'arachide.

7. Améliorateur de pain selon une ou plusieurs des revendications 1 à 6, **caractérisé en ce que** la fraction de poudre contient en outre un ou plusieurs micro-composants qui sont choisis dans le groupe constitué des moyens d'oxydation et de réduction, des enzymes, des arômes et des aromatisants.

8. Améliorateur de pain selon une ou plusieurs des revendications 1 à 7, **caractérisé en ce que** la fraction de poudre comprend en outre un ou plusieurs ingrédients de base qui sont choisis dans le groupe constitué des sucres, de la farine de grains et/ou des légumes, du gluten vital, des amidons, des amidons modifiés physiquement, du sel, des dérivés du lait et de la farine de malt.

9. Améliorateur de pain selon une ou plusieurs des revendications 1 à 8, **caractérisé en ce que** la fraction de poudre forme 5 à 55 pour cent, de préférence 10 à 50 pour cent et de manière plus préférée entre 30 à 50 pour cent de l'améliorateur de pain.

10. Procédé pour la préparation d'un améliorateur de pain pompable ayant une viscosité de 80 mPa.s. à 3 000 mPa.s. à 20° C, comprenant les étapes consistant à :
(a) mélanger la fraction d'huile liquide et les moyens pour prévenir la sédimentation de la fraction de poudre à une température à laquelle les moyens pour prévenir la sédimentation de la fraction de poudre sont liquides ;
(b) refroidir le mélange obtenu ; et
(c) ajouter et mélanger la fraction de poudre qui contient au moins un ou plusieurs émulsifiants,
dans lequel les moyens pour prévenir la sédimentation de la fraction de poudre sont choisis dans le groupe constitué des graisses durcies et des mono-/diglycérides, et
dans lequel les émulsifiants sont choisis parmi les stéaroyllactylates.

11. Procédé selon la revendication 10, **caractérisé en ce que** la fraction d'huile, la fraction de poudre et les moyens pour prévenir la sédimentation de la fraction de poudre sont définis selon les revendications 2 à 9.
